# EUROPÄISCHE PATENTSCHRIFT

(11) **EP 3 972 891 B1**
(45) Veröffentlichungstag und Bekanntmachung des Hinweises auf die Patenterteilung: **24.05.2023**
(21) Anmeldenummer: 20821112.8
(22) Anmeldetag: 23.10.2020
(51) Int. Cl.: B62J 1/28, A47C 3/025

(54) **RÜCKENSTÜTZE FÜR MIT EINER PEDALE ANGETRIEBENE GERÄTE**
BACK SUPPORT FOR PEDAL-DRIVEN DEVICES
APPUI DORSAL POUR ENGINS À PÉDALES

(30) Priorität: 24.10.2019 DE 102019007411
(43) Veröffentlichungstag der Anmeldung: 30.03.2022
(73) Patentinhaber: B&T Innotec Germany GmbH, 72406 Bisingen (DE)
(72) Erfinder: Bogenschütz, Josef, 72406 Bisingen (DE); Tscheinig, Andreas, 8101 Gratkorn (DE)
(74) Vertreter: Castell, Klaus
(86) Internationale Anmeldenummer: PCT/DE2020/000255
(87) Internationale Veröffentlichungsnummer: WO 2021/078317

(56) Entgegenhaltungen:
- WO-A1-2019/086059
- DE-A1- 4 239 548

## Beschreibung

Die Erfindung betrifft eine Rückenstütze für mit einer Pedale angetriebene Geräte, mit einer Halterung für eine Befestigung an einem Gerät und einem daran angeordneten Anlageteil zur Abstützung einer das Gerät bedienenden Person. Ferner betrifft die Erfindung auch einen Sattel mit einer derartigen Rückenstütze und ein Gerät, insbesondere ein Fahrrad mit einem Sattel, mit einer derartigen Rückenstütze. Derartige Rückenstützen eignen sich aber nicht nur für Fahrräder, Motorräder, Pedelecs, und andere Zweiräder oder mit einer Pedale betriebene Fahrzeuge, sondern auch für Sportgeräte, die ortsfest betrieben werden, wie Hometrainer oder Fitnessgeräte.

Eine gattungsgemäße Rückenstütze ist aus der WO 2019/086059 bekannt. Diese bekannte Sattelstütze bietet ein gutes Gegenlager für eine Person, die in eine Pedale tritt und sich mit dem Rücken und insbesondere mit dem unteren Rückenbereich an dieser Rückenstütze abstützen kann. Derartige Rückenstützen sind üblicherweise am Sattel und/oder an der Sattelstange befestigt.

Die GB 1911/12 532 A betrifft ein Fahrrad, bei dem die Rückenstütze federnd an einer senkrechten Strebe angeordnet ist. Rückenstützen mit einem gelenkig angeordneten Polster zeigen die US 6,206,399 B1 und die US 553,722 A.

Der Erfindung liegt die Aufgabe zu Grunde, eine derartige Rückenstütze weiterzuentwickeln.

Diese Aufgabe wird mit einer Rückenstütze mit den Merkmalen des Patentanspruchs 1 gelöst. Vorteilhafte Weiterbildungen sind Gegenstand der Unteransprüche.

Bekannte Sattelstützen haben Anlagekörper wie Kugeln oder Walzen, die beweglich zur Halterung angeordnet sind. Es hat sich jedoch herausgestellt, dass es besonders vorteilhaft ist, wenn das gesamte Anlageteil mit den daran angeordneten Anlagekörpern gelenkig mit der Halterung verbunden ist. Dies ermöglicht es, das Anlageteil relativ zur Halterung in einer bestimmten Position zu fixieren oder auch schwenkbar zu halten. Ein Hebelarm zwischen der Halterung und einem Anlagekörper ermöglicht eine Positionierung des Anlagekörpers auf einer Bogenlinie um die gelenkige Verbindung zwischen Anlageteil und Halterung. Dadurch kann die Höhe des Anlageteils und insbesondere von Anlagekörpern individuell eingestellt werden. Außerdem kann das Anlageteil leicht von der Halterung entfernt werden, wenn es beispielsweise beim Bergabfahren nicht benötigt wird oder sogar stören sollte.

Besonders vorteilhaft ist, dass das Anlageteil mehrere Anlagekörper aufweist, die jeweils gelenkig mit der Halterung verbunden sind.

Außerdem weist das Anlageteil einen Bügel auf, der gelenkig an der Halterung angeordnet ist. Ein derartiger Bügel kann im Schnitt I-förmig sein, um als Hebel Halterung und Anlagekörper miteinander zu verbinden.

Erfindungsgemäß weist das Anlageteil mehrere Anlagekörper auf, die über den Bügel miteinander verbunden sind, der gelenkig mit der Halterung verbunden ist. Hierbei ist es vorteilhaft, wenn der Bügel im Schnitt L-förmig ausgebildet ist oder L-Formartig ausgebildet ist. Hierbei muss der Winkel des L der Schenkel nicht genau 90 ° sein. Die Schenkel können beispielsweise auch V-förmig zueinander angeordnet sein.

Die L-förmige Ausbildung ermöglicht es, die Anlagekörper in einem bestimmten Abstand zueinander fest zu positionieren. Dabei wird die Position durch die Länge der Schenkel und den Winkel der Schenkel zueinander bestimmt. Darüber hinaus kann der Bügel nicht nur fest an der Halterung befestigt werden, sondern auch drehbeweglich an der Halterung befestigt sein. Dies führt dazu, dass das Anlageteil beim Fahrradfahren durch den vom Fahrer aufgebrachten Druck um eine Drehachse zwischen Anlageteil und Halterung schwingen kann, um einerseits einen entsprechenden Gegendruck zu bilden und andererseits auch so nachgeben zu können, dass die Anlagekörper optimal am Rücken des Fahrers anliegen. Die quer zur Fahrtrichtung beabstandet angeordneten Anlagekörper und deren elastisch gepolsterte Oberfläche ermöglichen darüber hinaus auch eine gewisse Anpassung um eine senkrechte Drehachse, wenn beim Fahren die Anlagekörper zunächst auf einer Seite besonders belastet werden und danach die Anlagekörper auf der anderen Seite des Fahrrades.

Für eine besonders gute ergonomische Anpassung während der Fahrt wird vorgeschlagen, dass der Bügel zwei Schenkel mit unterschiedlicher Länge aufweist.

Ein einfacher, leichter Aufbau ergibt sich, wenn der Bügel zwei in einem rechten, spitzen oder stumpfen Winkel, beispielsweise von etwa 90 ° angeordnete Schenkel aufweist.

Als Anlagekörper sind geometrische Körper unterschiedlicher Ausbildungen einsetzbar. Vorteilhaft ist es, wenn der Anlagekörper eine Kugel ist. Hierbei ist es vorteilhaft, wenn die Kugel entweder um eine Achse drehbar oder in einem Käfig drehbar gelagert ist. Der Anlagekörper kann auch eine Walze sein. Hierbei ist es vorteilhaft, wenn die Walze um ihre zentrale Achse drehbar ist.

Daher wird vorgeschlagen, dass mindestens ein Anlagekörper um eine Anlagekörperachse drehbar mit dem Bügel verbunden ist.

Die spezielle Ausbildung aus um eine Achse drehbaren kugel- oder walzenförmigen Anlagekörpern, einem Bügel, über den die Anlagekörper miteinander verbunden sind und der gelenkig mit der Halterung verbunden ist, wobei die Anlagekörperachse drehbar mit dem Bügel verbunden ist, ermöglicht eine einfache und individuelle Anpassung der Rückenstütze an den Fahrer des mit einer Pedale angetriebenen Gerätes. Sie bildet ein Gegenlager für die auf die Pedale wirkenden Kräfte, sie legt sich optimal am Rücken des Fahrers an und sie wirkt auch seitlich als Gegenlager, um den Fahrer, der beim in die Pedale treten den Rücken zur Seite bewegt, auf dem Sattel zu halten. Die runden Anlagekörper verhindern eine schleifende Relativbewegung zwischen den Anlagekörpern und dem Rücken des Fahrers. Der Bügel positioniert die Anlagekörper insbesondere in Fahrtrichtung optimal zum Rücken. Dabei ermöglicht er auch eine Anpassung in dazu senkrechter Richtung.

Da bei Fahrrädern besonders auf das Gewicht geachtet wird, ist ein großer Vorteil der vorgeschlagenen Rückenstütze, dass sie mit einfachen Mitteln auch bei den dynamischen Gewichtsverlagerungen beim Fahren den Anforderungen an Stabilität, Ergonomie und Leichtigkeit gerecht wird.

Hierbei ist es besonders vorteilhaft, wenn mindestens ein Anlagekörper auf die Anlagekörperachse aufsteckbar ist.

Weiterhin ist es vorteilhaft, wenn die Anlagekörperachse als Welle zusammen mit mindestens einem Anlagekörper relativ zum Bügel drehbar ist.

Ein Ausführungsbeispiel sieht vor, dass der Bügel um eine Bügelachse drehbar mit der Halterung verbunden ist.

Dabei ist es von Vorteil, wenn die Anlagekörperachse parallel zur Bügelachse angeordnet ist.

Besonders bevorzugt wird ein Bügel eingesetzt, der drei parallele Bohrungen für die Bügelachse und zwei Anlagekörperachsen aufweist. Dies ermöglicht es, alle Achsen beweglich zu halten. Somit können die Anlagekörper drehbeweglich gelagert werden und darüber hinaus kann der Bügel drehbeweglich an der Halterung befestigt sein. Das gesamte Anlageteil mit den drehbaren Anlagekörpern kann sich somit während der Fahrt relativ zur Halterung um eine Achse drehen. Dies führt dazu, dass sich das Anlageteil selbständig optimal positioniert.

Die Halterung der Rückenstütze kann besonders einfach und stabil hergestellt werden, wenn Sie ein Fachwerk aufweist.

Eine vielfältige Verwendung der Rückenstütze erschließt sich, wenn die Halterung teilbar ist. Es kann zum Einsparen von Gewicht auf das obere Teil verzichtet werden, während das untere Teil an der Sattelstange befestigt bleibt. Es können aber auch andere Teile wie ein Gepäckträger, eine Wasserflasche ein Kindersitz etc. auf einfache Art und Weise am unteren Teil befestigt werden. Besonders vorteilhaft ist es, wenn die Halterung eingebaut im unteren Drittel teilbar ist. Dadurch kann das Gewicht durch Abnehmen des oberen Teils deutlich reduziert werden und der Teilungsbereich ist dann hinter dem Sattel gut zugänglich. Es wird daher auch vorgeschlagen, dass die Halterung etwa in der Höhe des Sattels teilbar ist.

Eine bevorzugte Ausführungsform sieht vor dass die Halterung ein erstes Teil mit einer Hülse und ein zweites Teil mit einem Zapfen aufweist, wobei der Zapfen in die Hülse steckbar ist, um erstes Teil und zweites Teil miteinander zu verbinden.

Außerdem kann die Halterung eine Arretiereinrichtung aufweisen, um ineinander gesteckte Teile sicher miteinander zu verbinden. Diese Arretiereinrichtung kann einen Hebel, eine Verschraubung, einen Knopf oder Rastknopf aufweisen, die betätigt werden müssen, um die Teile der Halterung zu lösen. An dieser Verbindung kann auch ein Schloss angeordnet sein, das ein unbefugtes Teilen der Halterung verhindert.

Bevorzugte Ausführungsbeispiele sind in der Zeichnung dargestellt und werden im Folgenden näher erläutert.

Es zeigen
- Figur 1: eine schematische Darstellung einer Rückenstütze mit nur einem Anlagekörper,
- Figur 2: eine perspektivische Ansicht der in Figur 1 gezeigten Rückenstütze,
- Figur 3: einen Schnitt durch einen I-förmigen Bügel,
- Figur 4: eine perspektivische Ansicht des in Figur 3 gezeigten Bügels,
- Figur 5: eine perspektivische Ansicht eines als Walze ausgebildeten Anlagekörpers,
- Figur 6: eine schematische Ansicht einer Rückenstütze mit zwei Anlagekörpern,
- Figur 7: eine perspektivische Ansicht der in Figur 6 gezeigten Rückenstütze,
- Figur 8: einen Schnitt durch einen L-förmigen Bügel,
- Figur 9: eine perspektivische Ansicht des in Figur 8 gezeigten L-förmigen Bügels,
- Figur 10: eine perspektivische Ansicht von zwei als Walze ausgebildeten Anlagekörpern,
- Figur 11: die in Figur 10 gezeigten Anlagekörper mit dem in Figur 9 gezeigten Lförmigen Bügel,
- Figur 12: eine Rückenstütze mit einseitig kugelförmigen Anlagekörpern und auf der anderen Seite Anlagekörpern, die als Walze ausgebildet sind, und
- Figur 13: eine teilbare Halterung.

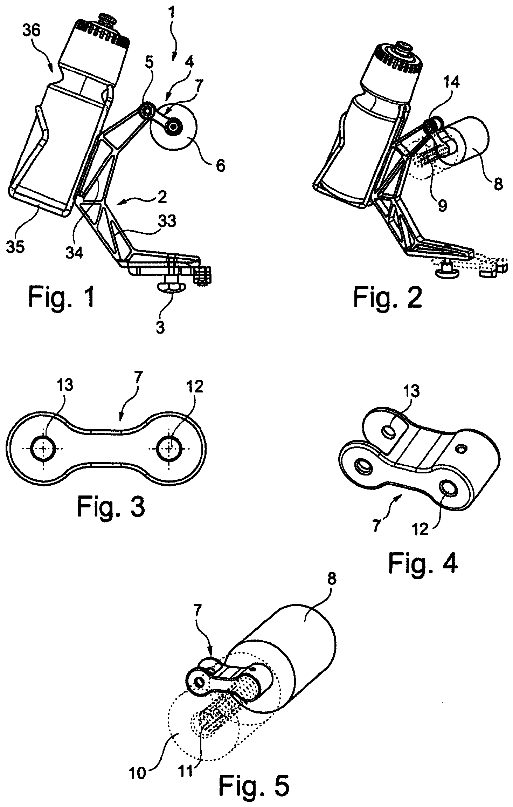

Die in Figur 1 gezeigte Rückenstütze 1 hat eine Halterung 2, die mittels einer manuell bedienbaren Schraube 3 an einem Sattel eines Fahrrads (nicht gezeigt) oder an einem anderen mittels einer Pedale angetriebenen Gerätes befestigt werden kann. Ein Anlageteil 4 dient der Abstützung einer das Gerät bedienenden Person (nicht gezeigt). Dieses Anlageteil ist mittels einer Feststellschraube 5 gelenkig und in verschiedenen Positionen fixierbar an der Halterung 2 befestigt.

Als Verbindung zwischen einem Anlagekörper 6 und der Halterung 2 dient in diesem Ausführungsbeispiel ein im Schnitt I-förmig ausgebildeter Bügel 7. Der Anlagekörper 6 ist eine Walze 8, die um eine Anlagekörperachse 9 drehbar mit dem Bügel 7 verbunden ist. Hierfür kann der Anlagekörper 6 einfach auf die Anlagekörperachse 9 aufgesteckt werden. Der Anlagekörper 6 kann mit dem Bügel 7 entlang des Rückens eines Fahrradfahrers beweglich sein oder in einer individuell zum Fahrradfahrer passenden Position eingestellt und fixiert werden (Variator).

In diesem Ausführungsbeispiel ist beidseitig des Bügels 7 jeweils eine Walze 8 und 10 angeordnet, die fest mit der Anlagekörperachse 9 verbunden sind, sodass die Anlagekörperachse 9 als Welle 11 zusammen mit den Anlageköpern 8 und 10 relativ zum Bügel 7 drehbar ist. Hierfür weist der Bügel 7 eine erste Bohrung 12 für die Welle 11 auf. Am anderen Ende des Bügels 7 ist eine Bohrung 13 für eine Bügelachse 14, um die das Anlageteil 4 drehbar mit der Halterung 2 verbunden ist. Dabei ist die Anlagekörperachse 8 parallel zur Bügelachse 14 angeordnet.

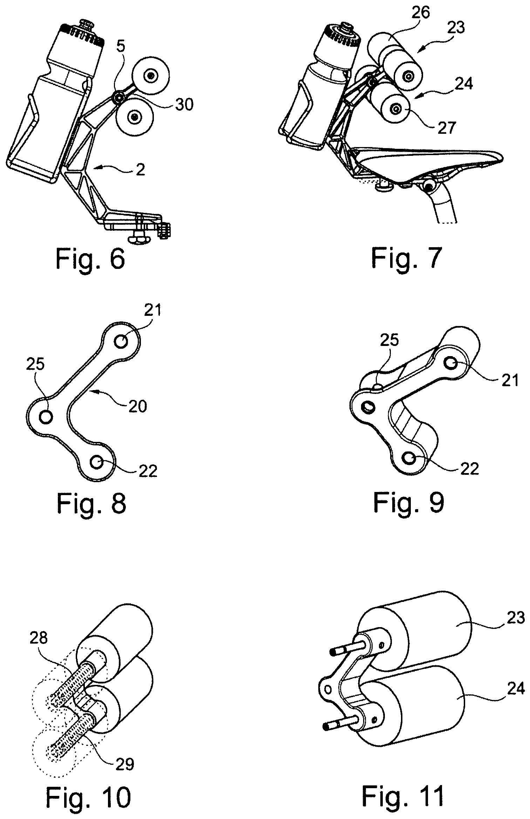

Das in den Figuren 6 bis 12 gezeigte weitere Ausführungsbeispiel ist im Wesentlichen, wie das in den Figuren 1 bis 5 gezeigte Ausführungsbeispiel aufgebaut. Der Bügel 20 ist jedoch im Schnitt L-förmig ausgebildet, um an beabstandeten Enden in Bohrungen 21 und 22 jeweils Anlagekörper 23, 24 zu halten. Mit der dazwischen liegenden Bohrung 25 wird der Bügel 20 an der Halterung 2 mittels einer Feststellschraube 5 gehalten.

Auch bei diesem Ausführungsbeispiel sind die Anlagekörper 23, 24 als Walzen 26, 27 ausgebildet, die auf eine Anlagekörperachse 28, 29 aufgesteckt sind. Die Bohrungen 21, 22 und 25 des Bügels 20 sind für eine Bügelachse 30 und zwei Anlagekörperachsen 28, 29 vorgesehen. Die Anlageteile 23 und 24 sind mit einer in der Welle 11 angebrachten Bohrung mit Gewinde durch eine Scheibe und Schraube so gesichert, das während der Bewegung des Fahrer in seitlicher Richtung (Z-Richtung) die Anlageteile bei starkem Druck nicht seitlich abfallen können. Diese Scheiben sind in den Figuren 6 und 7 gut zu sehen. Die Fig. 11 zeigt die Anlageteile 23 und 24 und die Welle 11, in der sich stirnseitig die Bohrung mit Gewinde befindet, um dort eine Schraube mit einer Sicherheitsscheibe anzubringen.

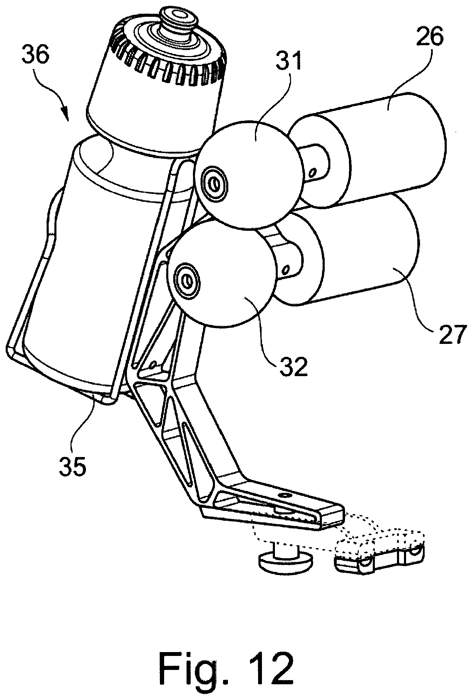

Die Figur 12 zeigt, wie auf Anlagekörperachsen sowohl Kugeln 31, 32 als auch Walzen 26, 27 verwendet werden können.

Die Halterung 2 hat verschiedene Streben 33, 34 (nur exemplarisch beziffert) mit denen die Halterung 2 als Fachwerk aufgebaut ist.

An dieser Halterung 2 ist im Ausführungsbeispiel eine Trinkflaschenhalterung 35 befestigt, die eine Trinkflasche 36 aufnimmt.

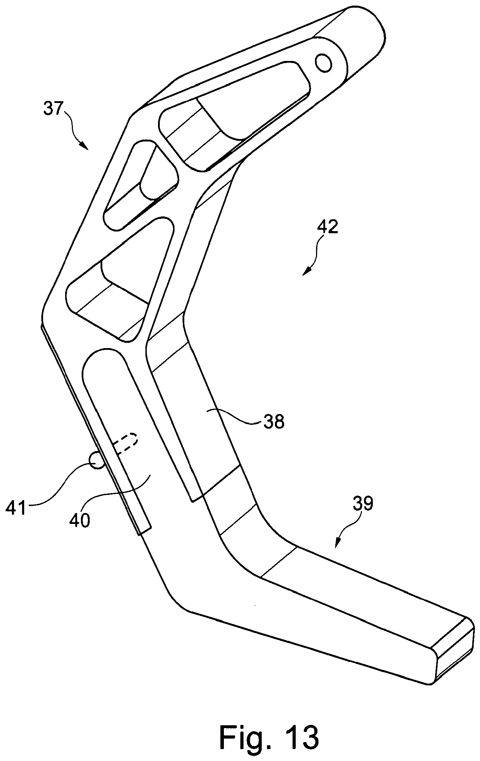

Die in Figur 13 gezeigte Halterung ist teilbar. Dafür weist die Halterung 42 ein erstes Teil 37 mit einer Hülse 38 und ein zweites Teil 39 mit einem Zapfen 40 auf, wobei der Zapfen 40 in die Hülse 38 steckbar ist, um erstes Teil 37 und zweites Teil 39 miteinander zu verbinden. Eine Arretiereinrichtung 41 ist nur als kleiner Stift angedeutet, der sich quer durch die Hülse 38 und den Zapfen 40 erstreckt, um zu verhindern, dass das zweite Teil 39 vom ersten Teil 37 abgezogen wird.

## Patentansprüche

1. Rückenstütze (1) für mit einer Pedale angetriebene Geräte mit einer Halterung (2) für eine Befestigung an einem Gerät und einem daran angeordneten Anlageteil (4) zur Abstützung einer das Gerät bedienenden Person, wobei das Anlageteil (4) gelenkig mit der Halterung (2) verbunden ist und mehrere Anlagekörper (6, 23, 24) und einen Bügel (7, 20) aufweist, über den die Anlagekörper (23, 24) miteinander verbunden sind, wobei mindestens ein Anlagekörper (6, 23, 24) eine Kugel (31, 32) oder eine Walze (26, 27) ist und um eine Anlagekörper-Achse (9, 28, 29) drehbar mit dem Bügel (7, 20) verbunden ist, ***dadurch gekennzeichnet, dass*** der Bügel gelenkig mit der Halterung (2) verbunden ist.

2. Rückenstütze nach Anspruch 1, ***dadurch gekennzeichnet, dass*** der Bügel (7) im Schnitt I-förmig ist.

3. Rückenstütze nach Anspruch 1 oder 2, ***dadurch gekennzeichnet, dass*** der Bügel (20) im Schnitt L-förmig ist.

4. Rückenstütze nach Anspruch 3, ***dadurch gekennzeichnet, dass*** der Bügel (20) zwei Schenkel mit unterschiedlicher Länge aufweist.

5. Rückenstütze nach Anspruch 3 oder 4, ***dadurch gekennzeichnet, dass*** der Bügel (20) zwei in einem Winkel von etwa 90 ° angeordnete Schenkel aufweist.

6. Rückenstütze nach einem der vorhergehenden Ansprüche, ***dadurch gekennzeichnet, dass*** mindestens ein Anlagekörper (6, 23, 24) auf die Anlagekörper-Achse (9, 28, 29) aufsteckbar ist.

7. Rückenstütze nach einem der vorhergehenden Ansprüche, ***dadurch gekennzeichnet, dass*** die Anlagekörper-Achse (9) als Welle (11) zusammen mit mindestens einem Anlagekörper (6, 23, 24) relativ zum Bügel (7, 20) drehbar ist.

8. Rückenstütze nach einem der vorhergehenden Ansprüche, ***dadurch gekennzeichnet, dass*** der Bügel (7, 20) um eine Bügel-Achse (14) drehbar mit der Halterung (2) verbunden ist.

9. Rückenstütze nach Anspruch 8, ***dadurch gekennzeichnet, dass*** die Anlagekörper-Achse (9) parallel zur Bügel-Achse (14) angeordnet ist.

10. Rückenstütze nach Anspruch 8 oder 9, ***dadurch gekennzeichnet, dass*** der Bügel (7) drei parallele Bohrungen (21, 22, 25) für die Bügelachse (30) und zwei AnlagekörperAchsen (28, 29) aufweist.

11. Rückenstütze nach einem der vorhergehenden Ansprüche, ***dadurch gekennzeichnet, dass*** die Halterung (2) ein Fachwerk aufweist.

12. Rückenstütze nach einem der vorhergehenden Ansprüche, ***dadurch gekennzeichnet, dass*** die Halterung (2) ein erstes Teil (37) mit einer Hülse (38) und ein zweites Teil (39) mit einem Zapfen (40) aufweist, wobei der Zapfen (40) in die Hülse (38) steckbar ist, um erstes Teil (37) und zweites Teil (39) miteinander zu verbinden.

13. Rückenstütze nach Anspruch 12, ***dadurch gekennzeichnet, dass*** die Halterung eine Arretiereinrichtung (41) aufweist, um ineinander gesteckte Teile (37, 39) sicher miteinander zu verbinden.

14. Sattel mit einer Rückenstütze nach einem der vorhergehenden Ansprüche.

15. Gerät, insbesondere Fahrrad mit einem Sattel, mit einer Rückenstütze nach einem der Ansprüche 1 bis 13.

## Claims

1. A back support (1) for pedal-driven devices with a holder (2) for attachment to a device and an abutment part (4) arranged thereon for supporting a person who is operating the device, wherein the abutment part (4) is hinged with the holder (2) and has several abutment bodies (6, 23, 24) and a bracket (7, 20) which connects the abutment bodies (23, 24) with each other, wherein at least one abutment body (6, 23, 24) is a ball (31, 32) or a roller (26, 27), and connected with the bracket (7, 20) so that it can rotate around an abutment body axis (9, 28, 29), ***characterized in that*** the bracket is hinged with the holder (2).

2. The back support according to claim 1, ***characterized in that*** the bracket (7) has an I-shaped section.

3. The back support according to claim 1 or 2, ***characterized in that*** the bracket (20) has an L-shaped section.

4. The back support according to claim 3, ***characterized in that*** the bracket (20) has two legs that vary in length.

5. The back support according to claim 3 or 4, ***characterized in that*** the bracket (20) has two legs arranged at an angle of about 90°.

6. The back support according to one of the preceding claims, ***characterized in that*** at least one abutment body (6, 23, 24) can be plugged onto the abutment body axis (9, 28, 29).

7. The back support according to one of the preceding claims, ***characterized in that*** the abutment body axis (9) can be rotated as a shaft (11) together with at least one abutment body (6, 23, 24) relative to the bracket (7, 20).

8. The back support according to one of the preceding claims, ***characterized in that*** the bracket (7, 20) is connected with the holder (2) so that it can rotate around a bracket axis (14).

9. The back support according to claim 8, ***characterized in that*** the abutment body axis (9) is arranged parallel to the bracket axis (14).

10. The back support according to claim 8 or 9, ***characterized in that*** the bracket (7) has three parallel boreholes (21, 22, 25) for the bracket axis (30) and two abutment body axes (28, 29).

11. The back support according to one of the preceding claims, ***characterized in that*** the holder (2) has a framework.

12. The back support according to one of the preceding claims, ***characterized in that*** the holder (2) has a first part (37) with a sleeve (38) and a second part (39) with a pin (40), wherein the pin (40) can be inserted into the sleeve (38) so as to connect the first part (37) with the second part (39).

13. The back support according to claim 12, ***characterized in that*** the holder has a locking device (41), so as to reliably connect the parts inserted (37, 39) into each other.

14. A saddle with a back support according to one of the preceding claims.

15. A device, in particular a bicycle with a saddle, with a back support according to one of claims 1 to 13.

## Revendications

1. Soutien dorsal (1) pour un véhicule propulsé par pédale, comportant une attache (2) permettant de le fixer sur un véhicule et une pièce d'appui (4) placée sur celle-ci, destinée à soutenir une personne se servant du véhicule, la pièce d'appui (4) étant assemblée de manière articulée avec l'attache (2) et comportant plusieurs organes d'appui (6, 23, 24) et un étrier (7, 20), par l'intermédiaire duquel les organes d'appui (23, 24) sont assemblés les uns avec les autres, au moins un organe d'appui (6, 23, 24) étant une sphère (31, 32) ou un rouleau (26, 27) et étant assemblé de manière rotative autour d'un axe (9, 28, 29) d'organe d'appui avec l'étrier (7, 20), ***caractérisé en ce que*** l'étrier est assemblé de manière articulée avec l'attache (2).

2. Soutien dorsal selon la revendication 1, ***caractérisé en ce qu'***en coupe, l'étrier (7) présente la forme d'un I.

3. Soutien dorsal selon la revendication 1 ou 2, ***caractérisé en ce qu'***en coupe, l'étrier (20) présente la forme d'un L.

4. Soutien dorsal selon la revendication 3, ***caractérisé en ce que*** l'étrier (20) comporte deux branches de différentes longueurs.

5. Soutien dorsal selon la revendication 3 ou 4, ***caractérisé en ce que*** l'étrier (20) comporte deux branches, placées sous un angle d'environ 90 °.

6. Soutien dorsal selon l'une quelconque des revendications précédentes, ***caractérisé en ce qu'***au moins un organe d'appui (6, 23, 24) est susceptible de s'emboîter sur l'axe (9, 28, 29) d'organe d'appui.

7. Soutien dorsal selon l'une quelconque des revendications précédentes, ***caractérisé en ce que*** l'axe (9) d'organe d'appui, sous la forme d'un arbre (11) est rotatif conjointement avec au moins un organe d'appui (6, 23, 24) par rapport à l'étrier (7, 20).

8. Soutien dorsal selon l'une quelconque des revendications précédentes, ***caractérisé en ce que*** l'étrier (7, 20) est assemblé en étant rotatif autour d'un axe (14) d'étrier avec l'attache (2).

9. Soutien dorsal selon la revendication 8, ***caractérisé en ce que*** l'axe (9) d'organes d'appui est placé à la parallèle de l'axe (14) d'étrier.

10. Soutien dorsal selon la revendication 8 ou 9, ***caractérisé en ce que*** l'étrier (7) comporte trois perçages (21, 22, 25) parallèles pour l'axe (30) d'étrier et deux axes (28, 29) d'organes d'appui.

11. Soutien dorsal selon l'une quelconque des revendications précédentes, ***caractérisé en ce que*** l'attache (2) comporte un treillis.

12. Soutien dorsal selon l'une quelconque des revendications précédentes, ***caractérisé en ce que*** l'attache (2) comporte une première partie (37) pourvue d'une douille (38) et une deuxième partie (39) pourvue d'un tenon (40), le tenon (40) étant insérable dans la douille (38) pour assembler l'une à l'autre la première partie (37) et la deuxième partie (39).

13. Soutien dorsal selon la revendication 12, ***caractérisé en ce que*** l'attache comporte un dispositif de blocage (41) pour assembler en toute sécurité les parties (37, 39) insérées l'une dans l'autre.

14. Selle, pourvue d'un soutien dorsal selon l'une quelconque des revendications précédentes.

15. Véhicule, notamment bicyclette avec une selle, pourvue d'un soutien dorsal selon l'une quelconque des revendications 1 à 13.
